Europäisches Patentamt

European Patent Office

Office européen des brevets

(19)

(11) Veröffentlichungsnummer: **0 355 493**
**A1**

## (12) EUROPÄISCHE PATENTANMELDUNG

(21) Anmeldenummer: **89114166.5**

(22) Anmeldetag: **01.08.89**

(51) Int. Cl.4: **B60R 21/13**

(30) Priorität: **03.08.88 DE 3826392**

(43) Veröffentlichungstag der Anmeldung:
**28.02.90 Patentblatt 90/09**

(84) Benannte Vertragsstaaten:
**AT BE CH DE ES FR GB IT LI**

(71) Anmelder: **DEERE & COMPANY**
**1 John Deere Road**
**Moline Illinois 61265(US)**

(72) Erfinder: **Ludwig, Dieter**
**Multring 35**
**D-6940 Weinheim(DE)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) Überschlagschutzvorrichtung für ein Fahrzeug.

(57) Bei Fahrzeugen, die mit einer Überschlagschutzvorrichtung ausgerüstet sind, kann es zweckmäßig
sein, die Überschlagschutzvorrichtung absenkbar
auszubilden. Dies erfolgt durch Verschwenken des
oberen Rahmenteiles (30), was vom Fahrersitz aus
möglich ist. Der obere Rahmenteil (30) ist über eine
Drehachse (32) mit am Fahrzeug befestigten Pfosten
(22) verbunden. Er läßt sich durch Sicherungsbolzen
(40) sowohl in der aufgerichteten Lage als auch in
einer abgekippten Lage arretieren. Der obere Rahmenteil (30) trägt einen Hebelarm (52) mit einem
Griff (54). Dieser Hebelarm (52) ermöglicht ein Verschwenken des oberen Rahmenteiles (30) um die
Drehachse (32), ohne daß sich der Fahrer von seinem Fahrersitz fortbewegen muß.

FIG.3

EP 0 355 493 A1

## Überschlagschutzvorrichtung für ein Fahrzeug

Die Erfindung betrifft eine Überschlagschutzvorrichtung für ein Fahrzeug, insbesondere Ackerschlepper, mit am Fahrzeugteil befestigten, im wesentlichen nach oben weisenden Pfosten und einem oberen Rahmenteil, der über eine Drehachse mit den Pfosten gelenkig verbunden ist, und mit Arretiermitteln zur Arretierung des verkippbaren oberen Rahmenteiles.

Aus Sicherheitsgründen enthalten Fahrzeuge einen Überschlagschutz, der beim Umkippen des Fahrzeuges in der Lage ist, die auftretenden Kräfte und das Fahrzeuggewicht aufzunehmen und einen Freiraum für den Fahrer zu schaffen, so daß die Gefahr von Verletzungen vermindert wird. Sofern eine Fahrerkabine nicht vorgesehen ist, in die ein Überschlagschutz integriert ist, besteht der Überschlagschutz häufig in Form eines im wesentlichen U-förmigen Bügels, dessen freie Schenkel mit dem Fahrzeuggestell verbunden sind und dessen Querschenkel oberhalb des Fahrerkopfes verläuft. Dabei ist der Überschlagschutz häufig das am weitesten nach oben herausragende Teil des Fahrzeuges.

Ein derart hoch überstehender Überschlagschutz kann bei bestimmten Situationen störend sein. Dies ist insbesondere dann der Fall, wenn das Fahrzeug durch eine niedrige Toreinfahrt gefahren werden soll. Es wurden daher Überrollbügel vorgeschlagen, die in ihrer Höhe verstellbar sind. Beispielsweise sind Überschlagschutzvorrichtungen bei Schleppern bekannt, die zweiteilig ausgebildet sind, wobei der obere Teil über Drehachsen mit dem unteren Teil gelenkig verbunden ist und nach Lösung von Arretierungsmitteln nach unten verkippbar ist. Zum Verkippen des oberen Teils ist es erforderlich, daß der Fahrer seinen Sitz und das Fahrzeug verläßt und nach Lösung von Arretierungsmitteln den oberen Teil verschwenkt. Dies ist unbequem und vom Sicherheitsstandpunkt aus nicht unbedenklich, da das Verlassen eines betriebsbereiten Fahrzeuges mit Gefahren verbunden ist.

Die der Erfindung zugrunde liegende Aufgabe wird darin gesehen, eine Überschlagschutzvorrichtung der eingangs genannten Art anzugeben, bei der ein Verkippen des oberen Rahmenteils vom Fahrersitz aus bequem möglich ist, ohne daß der Fahrer aufstehen muß.

Die Aufgabe wird erfindungsgemäß dadurch gelöst, daß der obere Rahmenteil einen Hebelarm mit einem Griff am freien Hebelende trägt. Der Hebelarm kann hierbei zweckmäßigerweise als runde oder profilierte Stange bzw. als Rohr ausgebildet sein. Seine Hebellänge wird so bemessen, daß die Betätigungskräfte zum Verschwenken des oberen Rahmenteiles so niedrig sind, daß dies auch kleinere bzw. schwächere Personen (z.B. Frauen oder Auszubildende) ohne zusätzliche Hilfe vornehmen können. Die Lage des Griffes des Hebelarmes läßt sich in einer vom Fahrersitz aus gut erreichbaren Position anbringen. Der Hebelarm ermöglicht ein Verschwenken des oberen Rahmenteiles in eine waagerechte Lage oder auch in eine Lage, bei der der obere Rahmenteil nach unten abgekippt ist. Besonders günstig wirkt sich die vorgeschlagene Lösung bei solchen Überschlagschutzvorrichtungen aus, bei denen die Pfosten am hinteren Fahrzeugteil, z. B. an den Achstrichtern der Hinterräder befestigt sind.

Eine vorteilhafte Ausgestaltung der Erfindung sieht vor, daß der Hebelarm in der Nähe der Drehachse am oberen Rahmenteil angreift. Hierdurch wird fast die gesamte Länge des Hebelarmes als Hebel genutzt, d. h. der Griff liegt weit vom Drehpunkt entfernt und ermöglicht ein relativ leichtes Verschwenken des oberen Rahmenteiles. Vorzugsweise ist der Hebelarm bei aufgerichtetem oberen Rahmenteil in etwa parallel zu einem Pfosten ausgerichtet und erstreckt sich von der Drehachse aus im wesentlichen nach unten. Hierdurch befindet sich der Handgriff unterhalb des Drehpunktes, wo ihn der Fahrer aus seiner Sitzposition leicht erfassen und zum Verschwenken des oberen Rahmenteiles nach oben drücken kann.

Besonders vorteilhaft ist es, am oberen Rahmenteil eine Führung zu befestigen, in der der Hebelarm in seiner Längsrichtung verschiebbar geführt ist. Bei aufgerichtetem oberen Rahmenteil gleitet der Hebelarm in der Führung nach unten, so daß der Fahrer den Griff leicht erfassen kann. Bei nach unten umgeklapptem oberen Rahmenteil ragt der Hebelarm mit seinem Griff zunächst nach oben. Er gleitet dann jedoch infolge seiner Schwerkraft durch die Führung nach unten, so daß jetzt sein dem Griff abgewandtes Ende nach unten übersteht. Die Führung ist dem Querschnitt des Hebelarmes angepaßt und kann als Rundrohr oder Vierkantrohr ausgebildet sein.

Zweckmäßigerweise enthält der Hebelarm eine Schutzvorrichtung, die die Hand des Fahrers vor Verletzungen, insbesondere vor Quetschungen schützt. Ein derartiger Schutz läßt sich durch einen tellerförmigen Handschutz realisieren, der im Bereich des Griffes des Hebelarmes angeordnet ist. Ein derartiger Handschutz hat den zusätzlichen Vorteil, daß er als Anschlag für den in der Führung gleitenden Hebelarm dient.

Ein weiterer Anschlag befindet sich vorzugsweise auf dem anderen Ende des Hebelarmes. Dieser Anschlag kann beispielsweise als Scheibe oder Querbolzen ausgeführt sein.

Zur Sicherung des oberen Rahmenteils in seiner aufgerichteten Position sieht eine Weiterbildung der Erfindung vor, daß wenigstens ein Pfosten eine nach oben überstehende Lasche aufweist, die in eine Ausnehmung des aufgerichteten oberen Rahmenteils eingreift, und daß die Lasche und das obere Rahmenteil korrespondierende Querbohrungen aufweisen, durch die ein Sicherungsbolzen steckbar ist. Die Ausbildung als Lasche und Ausnehmung gewährleistet eine gute Lageorientierung und Versteifung des oberen Rahmenteiles.

Zur Fixierung des oberen Rahmenteils in einer abgekippten Position schlägt eine weitere Ausgestaltung der Erfindung vor, daß die Pfosten und der obere Rahmenteil seitlich überstehende Laschen tragen, die die Drehachse aufnehmen, und daß sich in den Laschen wenigstens eines Pfostens und dem oberen Rahmenteils parallel zur Drehachse verlaufende Bohrungen befinden, die bei umgeklapptem oberen Rahmenteil fluchten, so daß ein Sicherungsbolzen durchsteckbar ist. Sowohl die Querbohrungen, die der Sicherung des oberen Rahmenteils in aufgerichteter Lage dienen, als auch die Bohrungen, die der Sicherung in abgekippter Lage dienen, sollten an einer solchen Stelle angeordnet werden, daß ein Umstecken des Sicherungsbolzens beim Verschwenken des oberen Rahmenteils vom Fahrersitz aus möglich ist. Hierdurch wird eine bequeme Handhabung für den Fahrer erreicht.

Zur Erleichterung der Handhabung ist vorzugsweise ein Sicherungsbolzen vorgesehen, der an einem Ende einen bügelförmigen Handgriff aufweist.

Zur Sicherung des Sicherungsbolzens gegen axiale Verschiebung und Herausfallen in Folge von Erschütterungen und dergleichen sieht eine besonders bevorzugte Weiterbildung der Erfindung vor, daß der Sicherungsbolzen im Bereich des aus der Bohrung herausragenden Endes, an dem der Handgriff befestigt ist, einen Querausleger trägt. Ferner ist am oberen Rahmenteil in der Nähe der Querbohrung und/oder der Bohrung eine Sicherungsfeder befestigt. Die Lage der Sicherungsfeder ist so gewählt, daß bei Verdrehen des Sicherungsbolzens in der Bohrung der Querausleger von der Sicherungsfeder aufgenommen wird, so daß ein axiales Verschieben des Sicherungsbolzens verhindert wird. Die Sicherungsfeder kann beispielsweise am oberen Rahmenteil festgeschweißt sein.

In zweckmäßiger Weise sind Handgriff und Ausleger einstückig aus Rundmaterial hergestellt.

Um für die beiden unterschiedlichen Lagen des oberen Rahmenteils nicht je eine Sicherungsfeder vorsehen zu müssen, ist es vorteilhaft, die Sicherungsfeder so anzuordnen, daß sie eine Aufnahme des Querauslegers des Sicherungsbolzens ermöglicht, unabhängig davon, ob der Sicherungsbolzen sich in der genannten Querbohrung oder in der Bohrung befindet.

Vorzugsweise sind der Sicherungsbolzen und die Sicherungsfeder unverlierbar miteinander verbunden. Die Unverlierbarkeit kann durch einen Draht, eine Kette, ein Kunststoffband oder durch Kunststoffasern hergestellt werden. Hierdurch ist der Bolzen unverlierbar. Als Draht kommt beispielsweise Stahldraht in Frage.

Anhand der Zeichnung, die ein Ausführungsbeispiel der Erfindung zeigt, sollen die Erfindung sowie weitere Vorteile und vorteilhafte Ausgestaltungen der Erfindung näher beschrieben und erläutert werden.

Es zeigt:

Fig. 1 eine schematische Seitenansicht eines Schleppers mit erfindungsgemäßer Überschlagschutzvorrichtung,

Fig. 2 und 3 eine Ansicht von hinten und eine Ansicht von der rechten Seite der Über. schlagschutzvorrichtung, bei der der obere Rahmenteil hochgeklappt ist,

Fig. 4 und 5 Ansichten gemäß Fig. 2 und 4, bei der der obere Rahmenteil runtergeklappt ist,

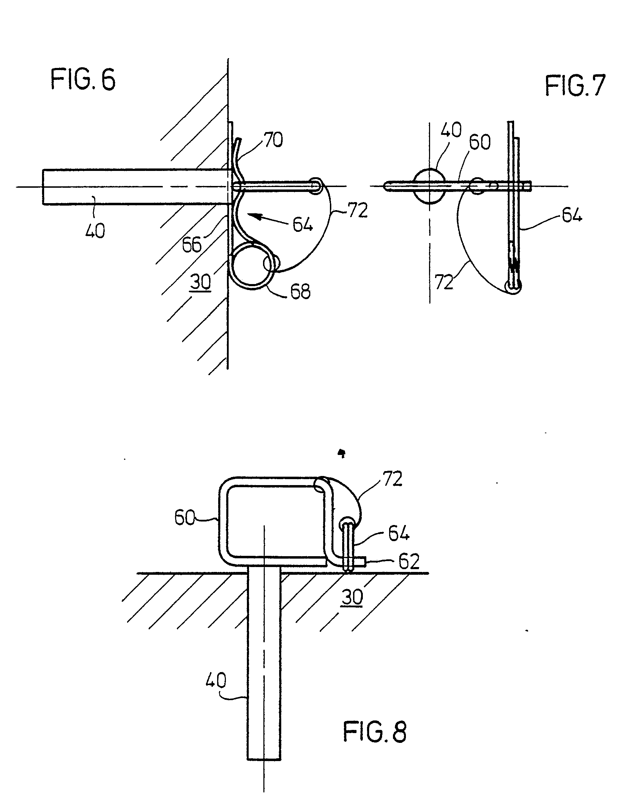

Fig. 6, 7 und 8 eine Seitenansicht, eine Draufsicht und eine weitere Seitenansicht eines Sicherungsbolzens mit Sicherungsfeder.

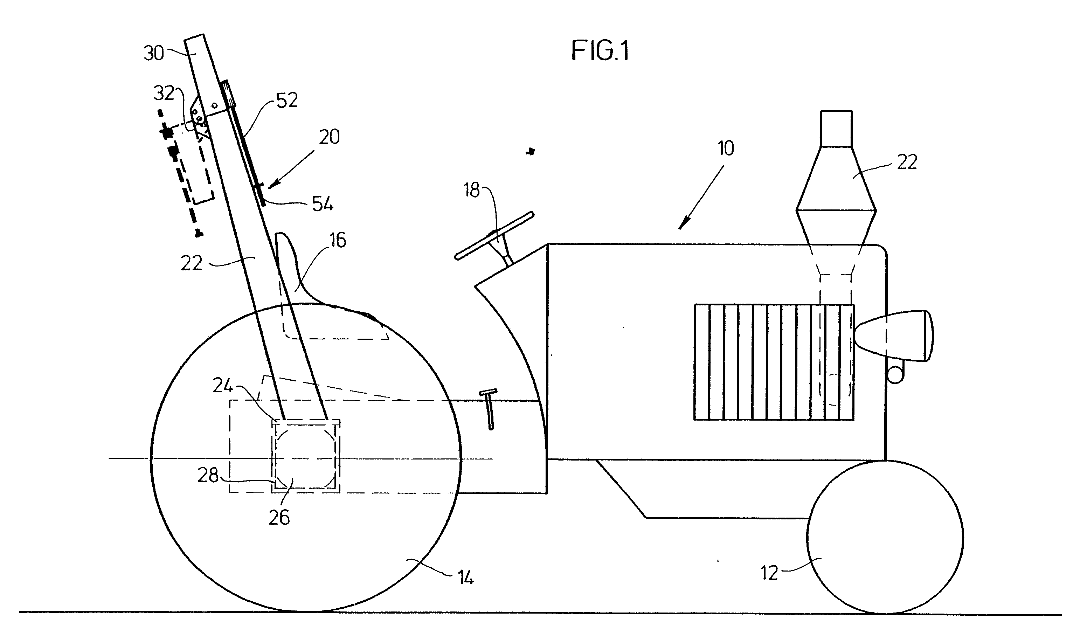

Die erfindungsgemäße Überschlagschutzvorrichtung wird exemplarisch anhand eines in Fig. 1 dargestellten Traktors beschrieben. Der Traktor 10 enthält insbesondere zwei Vorderräder 12, zwei Hinterräder 14, einen Fahrersitz 16 und ein Lenkrad 18. Im hinteren Bereich des Traktors 10, in der Nähe des Fahrersitzes 16 befindet sich ein Überschlagbügel 20. Der Überschlagbügel ragt mit seinem oberen Teil über die übrigen Traktorkonturen, insbesondere das Abgasrohr 22, hinaus.

Der Überschlagbügel 20, der auch Überschlagschutzvorrichtung genannt wird, besteht aus zwei seitlichen Pfosten 22. Die seitlichen Pfosten 22 sind an Bodenplatten 24 befestigt, welche ihrerseits mit um die Achstrichter 26 gelegten U-Bügeln 28 verschraubt sind. Am oberen Ende der Pfosten 22 ist ein oberer Rahmenteil 30 mittels einer Drehachse 32 verschwenkbar angeordnet. Der obere Rahmenteil ist U-förmig ausgebildet und besteht aus zwei Schenkeln und einem Querteil 31. In Fig. 1 ist der obere Rahmenteil mit durchgezogenen Linien in aufgestellter Lage und durch unterbrochene Linien in abgekippter Lage dargestellt.

Die Pfosten 22 tragen in ihrem oberen Endbereich Laschen 34, die bei hoch geklapptem oberen Rahmenteil in Ausneh mungen des Rahmenteiles eingreifen. In den Laschen 34 und dem oberen Rahmenteil 30 befinden sich parallel zur Querachse 32 liegende Querbohrungen 36, 38, die bei aufgerichtetem oberen Rahmenteil 30 fluchten, so daß ein Sicherungsbolzen 40 durch die korrespondierenden Querbohrungen 36, 38 durchsteckbar ist.

Im oberen Bereich der Pfosten 22 ist seitlich eine Lasche 42 angeformt. Ferner ist in den unteren Bereichen der nach unten weisenden Schenkel des U-förmig ausgebildeten oberen Rahmenteils 30 seitlich je eine Lasche 44 angeformt. Die Laschen 42 der Pfosten 22 sind mit den Laschen 44 des oberen Rahmenteiles 30 durch eine Drehachse 32 verbunden. Ferner enthält jede der Laschen 42, 44 eine parallel zur Drehachse 32 ausgerichtete Bohrung 46, 48, die bei heruntergeklapptem oberen Rahmenteil 30 miteinander fluchten, so daß ein Sicherungsbolzen 40 durch die korrespondierenden Bohrungen 46, 48 durchsteckbar ist.

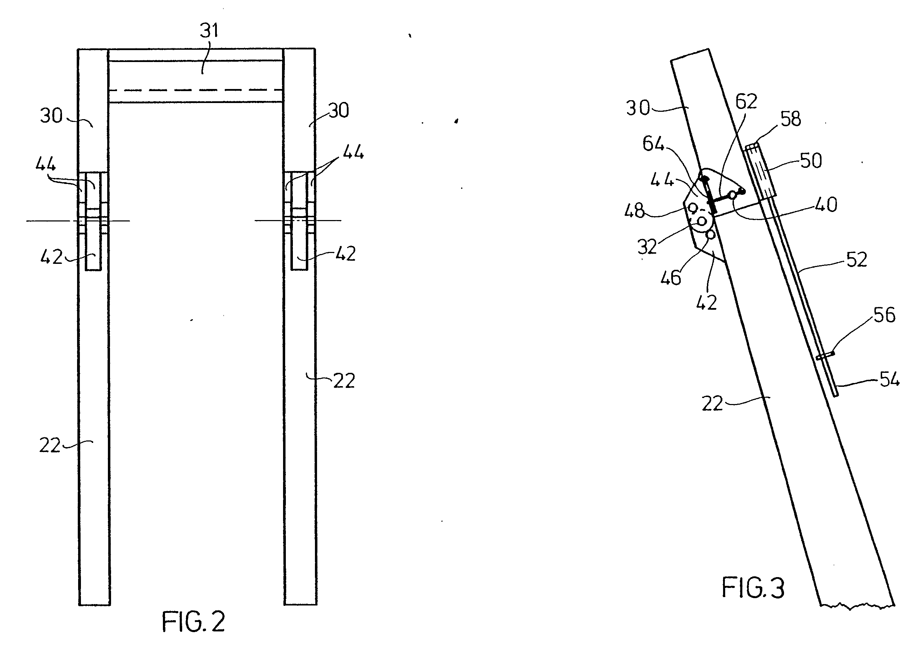

Am unteren, dem Pfosten 22 zugewandten Bereich des oberen Rahmenteiles 30 ist eine rohrförmige Führung 50 befestigt. In der Führung 50 ist ein in Längsrichtung verschiebbarer Hebelarm 52 angeordnet. Bei hochgeklapptem oberen Rahmenteil 30 ragt der Hebelarm 52 weit nach unten aus der Führung 50 heraus (Fig. 2 und 3).

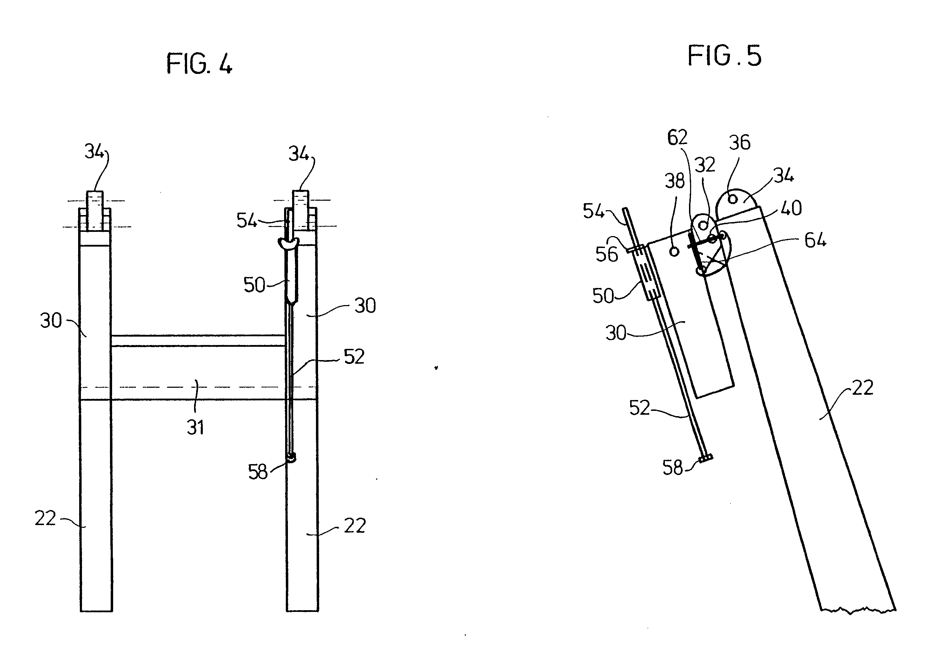

Im unteren Bereich des Hebelarmes 52 befindet sich ein Griff 54. An diesem Griff 54 kann der Fahrer zupacken, um den oberen Rahmenteil 30 zu verschwenken. Der Griff 54 ist durch einen tellerförmigen Handschutz 56 vom übrigen Hebelarm 52 getrennt. Am anderen Ende des Hebelarmes 52 befindet sich ein Anschlag 58, der ein Herausgleiten des Hebelarmes 52 aus der Führung 50 verhindert. Wenn der obere Rahmenteil 30 nach unten geklappt ist, gleitet der Hebelarm 52 durch die Führung 50 hindurch, so daß nunmehr das Ende mit dem Anschlag 58 weit nach unten aus der Führung 50 herausragt, während der Handschutz 56 an der Führung 50 anliegt (Fig. 4 und 5).

Wie bereits erwähnt wurde, läßt sich die Position des oberen Rahmenteiles 30 durch Einstecken des Sicherungsbolzens 40 in eines der korrespondierenden Bohrungspaare 36, 38 bzw. 46, 48 sichern. Der Sicherungsbolzen 40 trägt an seinem einen Ende einen Handgriff 60, der rechteckförmig ausgebildet ist, und in einen Querausleger 62 ausläuft. Der Handgriff 60 ist aus Rundmaterial hergestellt und mit dem Sicherungsbolzen 40 verschweißt. Auf dem oberen Rahmenteil 30 ist benachbart zu den Bohrungen 38 und 48 eine Feder 46 befestigt. Diese besteht aus einem geraden Abschnitt 66, welcher über zwei Windungen 68 mit einem geschwungenen Abschnitt 70 in Verbindung steht. Der gerade Abschnitt 66 ist an zwei Stellen mit dem oberen Rahmenteil 30 verschweißt. Sein freier Schenkel ist länger ausgebildet als der freie Schenkel des geschwungenen Abschnittes 70. Zwischen dem geraden Abschnitt 66 und dem geschwungenen Abschnitt 70 läßt sich durch Verdrehen des Sicherungsbolzens 40 des Auslegers 62 einklemmen. Hierdurch wird der Bolzen 40 am Herausrutschen aus den Bohrungen gehindert. Die Feder 64 ist derart auf dem oberen Rahmenteil 30 befestigt, daß sie sowohl im Einflußbereich des Auslegers 62 eines in die Bohrung 38 als auch im Einflußbereich des Auslegers 62 eines in die Bohrung 48 eingesteckten Sicherungsbolzens 40 liegt. Hierdurch ist für beide Bolzenlagen lediglich eine Sicherungsfeder 64 erforderlich.

Um den Sicherungsbolzen 40 bei der Montage unverlierbar zu machen, ist dieser durch einen Draht 72 mit den Windungen 48 der Feder 64 verbunden.

Will der Fahrer von seinem Fahrersitz 16 aus den oberen Rahmenteil 30 herunterschwenken, um beispielsweise durch eine tiefe Durchfahrt hindurchfahren zu können, so kann er folgendermaßen verfahren:

Er wendet sich nach hinten, ohne von seinem Fahrersitz 16 aufzustehen und ergreift mit einer Hand den Griff 54. Er verdreht mit dem Handgriff 60 den Sicherungsbolzen 40, so daß der Ausleger 62 aus dem Eingriffsbereich der Feder 64 kommt. Dann zieht er den Sicherungsbolzen 40 aus den Querbohrungen 36 und 38 heraus. Damit ist das obere Rahmenteil 30 zum Verkippen frei. Der Sicherungsbolzen 40 kann losgelassen werden, da er durch den Draht 72 mit der Feder 64 verbunden und somit unverlierbar ist.

Nun kann der Fahrer durch Hochschwenken des Hebelarmes 52 das obere Rahmenteil 30 nach hinten herunterklappen. Danach kann er den Griff 54 loslassen. Bei heruntergeklapptem oberen Rahmenteil 30 bewegt sich der Hebelarm 52 durch die Führung 50 hindurch und gleitet mit seinem Ende, an dem sich der Anschlag 58 befindet, nach unten. Der Fahrer kann nunmehr durch leichtes Verschwenken des oberen Rahmenteiles die beiden Bohrungen 46 und 48 in fluchtende Stellung bringen und den Sicherungsbolzen 40 einstecken und soweit verdrehen, daß der Ausleger 42 in den Einflußbereich der Feder 64 gerät. Damit ist der obere Rahmenteil 30 in seiner heruntergeklappten Stellung gesichert und am Pendeln gehindert.

Das Hochklappen des oberen Rahmenteiles 30 erfolgt in umgekehrter Reihenfolge.

## Ansprüche

1. Überschlagschutzvorrichtung für ein Fahrzeug, insbesondere Schlepper, mit am Fahrzeugteil befestigten, im wesentlichen nach oben weisenden Pfosten und einem oberen Rahmenteil, der über eine Drehachse mit den Pfosten gelenkig verbunden ist, und mit Arretiermitteln zur Arretierung des verkippbaren oberen Rahmenteiles, dadurch gekennzeichnet, daß der obere Rahmenteil (30) einen Hebelarm (52) mit einem Griff (54) am freien Hebelende trägt.

2. Überschlagschutzvorrichtung nach Anspruch 1, dadurch gekennzeichnet, daß der Hebelarm (52) in der Nähe der Drehachse (32) am oberen Rahmenteil (30) angreift.

3. Überschlagschutzvorrichtung nach Anspruch 1 oder 2, dadurch gekennzeichnet, daß der Hebelarm (52) bei aufgerichtetem oberen Rahmenteil (30) in etwa parallel zu einem Pfosten (22) ausgerichtet ist und sich von der Drehachse (32) aus im wesentlichen nach unten erstreckt.

4. Überschlagschutzvorrichtung nach einem der Ansprüche 1 bis 3, dadurch gekennzeichnet, daß der Hebelarm (52) sich bei aufgerichtetem oberen Rahmenteil (30) von der Drehachse (32) aus im wesentlichen nach unten erstreckt und im unteren Bereich einen Griff (54) aufweist.

5. Überschlagschutzvorrichtung nach einem der Ansprüche 1 bis 4, dadurch gekennzeichnet, daß am oberen Rahmenteil (30) eine Führung (50) befestigt ist, in der der Hebelarm (52) in seiner Längsrichtung verschiebbar ist.

6. Überschlagschutzvorrichtung nach einem der Ansprüche 1 bis 5, dadurch gekennzeichnet, daß der Hebelarm (52) im Bereich seines Griffes (54) einen tellerförmigen Handschutz (56) trägt.

7. Überschlagschutzvorrichtung nach Anspruch 5 oder 6, dadurch gekennzeichnet, daß der Hebelarm (52) auf seinem dem Griff (54) abgewandten Ende einen Anschlag (58) trägt.

8. Überschlagschutzvorrichtung nach einem der Ansprüche 1 bis 7, dadurch gekennzeichnet, daß wenigstens ein Pfosten (22) eine nach oben überstehende Lasche (34) aufweist, die in einer Ausnehmung des aufgerichteten oberen Rahmenteils (30) eingreift, und daß die Lasche (34) und das obere Rahmenteil (30) korrespondierende Querbohrungen (36, 38) aufweisen, durch die ein Sicherungsbolzen (40) steckbar ist.

9. Überschlagschutzvorrichtung nach einem der Ansprüche 1 bis 8, dadurch gekennzeichnet, daß die Pfosten (22) und der obere Rahmenteil (30) seitlich überstehende Laschen (42, 44) tragen, die die Drehachse (32) aufnehmen, und daß sich in den Laschen (42, 44) wenigstens eines Pfostens (22) und des oberen Rahmenteils (30) parallel zur Drehachse (32) verlaufende Bohrungen (46, 48) befinden, die bei umgeklapptem oberen Rahmenteil (30) fluchten, so daß ein Sicherungsbolzen (40) durchsteckbar ist.

10. Überschlagschutzvorrichtung nach einem der Ansprüche 1 bis 9, dadurch gekennzeichnet, daß ein Sicherungsbolzen (40) vorgesehen ist, der an einem Ende einen bügelförmigen Handgriff (60) aufweist.

11. Überschlagschutzvorrichtung nach einem der Ansprüche 8 bis 10, dadurch gekennzeichnet, daß der Sicherungs bolzen (40) im Bereich seines aus der Bohrung herausragenden Endes einen Querausleger (62) trägt, und der obere Rahmenteil (30) in der Nähe der Querbohrung (38) und/ oder Bohrung (48) eine Sicherungsfeder (64) trägt, derart, daß ein in die Bohrung (48) oder Querbohrung (38) eingesteckter Sicherungsbolzen (40) so verdrehbar ist, daß der Querausleger (62) von der Sicherungsfeder (64) aufgenommen wird.

12. Überschlagschutzvorrichtung nach Anspruch 11, dadurch gekennzeichnet, daß der Handgriff (60) und der Querausleger (62) einstückig sind.

13. Überschlagschutzvorrichtung nach Anspruch 11 oder 12, dadurch gekennzeichnet, daß die Sicherungsfeder (64) so angeordnet ist, daß sie eine Aufnahme des Querauslegers (62) des Sicherungsbolzens (40) sowohl bei in die Querbohrung (38) als auch bei in die Bohrung (48) eingestecktem Sicherungsbolzen (40) ermöglicht.

14. Überschlagschutzvorrichtung nach einem der Ansprüche 11 bis 13, dadurch gekennzeichnet, daß der Sicherungsbolzen (40) und die Sicherungsfeder (64) unverlierbar miteinander verbunden sind.

FIG.1

FIG. 2

FIG. 3

EP 0 355 493 A1

FIG. 4

FIG. 5

EP 0 355 493 A1

FIG. 6

FIG. 7

FIG. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 543 077 (FISCHER) <br> * Insgesamt * <br> --- | 1 | B 60 R 21/13 |
| A | DE-U-8 803 908 (XAVER FENDT & CO.) <br> * Figuren; Seiten 7-10 * <br> --- | 1 | |
| A | US-A-3 188 111 (ELLS) <br> * Figuren; Spalte 2, Zeile 70 - Spalte 5, Zeile 56 * <br> --- | 1 | |
| A | US-A-3 917 310 (MITSUISHI) <br> * Figuren 2-6; Spalte 3, Zeile 6 - Spalte 4, Zeile 65 * <br> --- | 1 | |
| A | GB-A-2 175 259 (J.I. CASE EUROPE LTD) <br> * Insgesamt * <br> ----- | 1,8,9 | |

RECHERCHIERTE SACHGEBIETE (Int. Cl.5)

B 60 R
B 66 F

**Der vorliegende Recherchenbericht wurde für alle Patentansprüche erstellt**

| Recherchenort | Abschlußdatum der Recherche | Prüfer |
|---|---|---|
| DEN HAAG | 31-10-1989 | DUBOIS B.F.J. |